Europäisches Patentamt

European Patent Office

Office européen des brevets

(19)

(11) Veröffentlichungsnummer: **0 101 566**
**B1**

(12) # EUROPÄISCHE PATENTSCHRIFT

(45) Veröffentlichungstag der Patentschrift:
19.06.85

(21) Anmeldenummer: 83107134.5

(22) Anmeldetag: 21.07.83

(51) Int. Cl.⁴: **C 09 D 3/72,** C 08 L 75/06,
C 08 G 18/08, C 08 G 18/68,
C 08 G 18/10, C 08 L 93/02,
C 09 D 3/40 // C08J7/04,
(C08L75/06, 93:02),(C08L93/02,
75:06)

(54) **Wässrige Dispersion auf der Basis eines Polyurethankunstharzes.**

(30) Priorität: 19.08.82 DE 3230851

(43) Veröffentlichungstag der Anmeldung:
29.02.84 Patentblatt 84/9

(45) Bekanntmachung des Hinweises auf die Patenterteilung:
19.06.85 Patentblatt 85/25

(84) Benannte Vertragsstaaten:
AT BE CH DE FR GB IT LI NL SE

(56) Entgegenhaltungen:
EP - A - 0 073 517
DE - A - 1 915 800

(73) Patentinhaber: **BASF Farben + Fasern
Aktiengesellschaft, Am Neumarkt 30,
D-2000 Hamburg 70 (DE)**

(72) Erfinder: **Hille, Hans-Dieter, In der Schlade 24,
D-5060 Bergisch Gladbach (DE)**
Erfinder: **Harten, Rolf, Goldstrasse 54, D-4400 Münster
(DE)**

(74) Vertreter: **Habbel, Hans-Georg, Dipl.-Ing.,
Postfach 3429 Am Kanonengraben 11, D-4400 Münster
(DE)**

**Beschreibung**

Die Erfindung betrifft gattungsgemäß wäßrige Dispersionen auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist.

Derartige wäßrige Dispersionen sind bekannt. In der DE-OS 1 495 745 wird ein Verfahren zur Herstellung wäßriger, emulgatorfreier Polyurethanlatices auf der Grundlage von aus Polyhydroxylverbindungen, Polyisocyanaten und gegebenenfalls Kettenverlängerungsmitteln hergestellten Polyurethanmassen beschrieben.

Die bisher bekannten gattungsgemäßen Dispersionen weisen den Nachteil auf, daß sie bei physikalischer Trocknung ohne Härterzusatz keine lösungsmittelbeständigen Überzüge liefern. Insbesondere gegenüber Aceton aber auch gegenüber anderen Lösungsmitteln sind die Überzüge empfindlich, was ihren Gebrauchswert stark mindert.

Es ist Aufgabe der Erfindung, diesen Nachteil des Standes der Technik zu vermeiden und wäßrige Dispersionen auf der Basis von Polyurethankunstharzen sowie ein Verfahren ihrer Herstellung anzugeben, die ohne Härterzusatz zu lösungsmittelbeständigen Überzügen aushärten. Die Dispersionen sollen auch auf schwierigen Substraten wie Polyethylen oder Polyvinylchlorid Überzüge mit guter Haftung und guter Härte ergeben, und die aufgebrachten Überzugsfilme sollen schnell aushärten.

Überraschenderweise wurde nun gefunden, daß diese Aufgabe durch Dispersionen der in Rede stehenden Art gelöst werden kann, wenn diese als Bindemittel ein Polyurethankunstharz, das als wesentlichen Baustein eine ungesättigte Polyesterkomponente enthält, und verseiften Schellack enthalten.

Gegenstand der Erfindung sind also wäßrige Dispersionen auf der Basis eines Polyurethankunstharzes, die dadurch gekennzeichnet sind, daß

— das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenproduktes mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wäßrige Phase und Umsetzung der Isocyanatgruppen des zweiten Zwischenprodukts mit einem Di- und/oder Polyamin mit primären und/oder sekundären Aminogruppen erhalten worden ist, und

— die Dispersionen als weiteres Bindemittel durch Einwirkung von Basen verseiften Schellack enthalten, wobei, jeweils auf den Festkörpergehalt bezogen, der Anteil an Polyurethankunstharz 40 bis 70 Gew.-% der Anteil an verseiften Schellack 60 bis 30 Gew.-% betragen und die Summe der beiden Bestandteile 100% ergibt.

Unter dem Begriff Polyester werden Polykondensate aus Polyolen und Polycarbonsäuren, insbesondere lineare Polykondensate aus einem Diol- und einer Dicarbonsäure verstanden. Ungesättigte Polyester sind derartige Kondensate mit Doppelbindungen insbesondere in der Hauptkette des Moleküls. Hierbei können die Doppelbindungen aus dem Diol und/oder der Dicarbonsäure stammen, wobei Polyester bevorzugt werden, deren Doppelbindungen aus der Dicarbonsäure stammen. Geeignete Diole für die Herstellung der Polyester sind beispielsweise Ethylenglykol und seine Homologen, Neopentylglykol, 2-Methyl-2-Ethylpropandiol-1,3, Cyclohexandiol und dergleichen.

Als Dicarbonsäure sind beispielsweise Maleinsäure bzw. ihr Anhydrid, Fumarsäure, Citraconsäure, Mesaconsäure oder auch Itaconsäure geeignet. Zusammen mit diesen ungesättigten Dicarbonsäuren werden auch gesättigte Dicarbonsäuren wie Glutarsäure, Pimelinsäure, Azellainsäure, Sebazinsäure und insbesondere Adipinsäure verwendet. Es werden Polyester bevorzugt, die aus Maleinsäureanhydrid als ungesättigtem Dicarbonsäurebaustein aufgebaut sind und ein Molekulargewicht von 500 bis 2000 aufweisen.

Bei dem Polyester zur Herstellung des Polyurethankunstharzes kann es sich also um einen ungesättigten Polyester oder ein Gemisch eines ungesättigten Polyesters mit einem linearen Diol handeln. Wesentlich ist, daß die Gesamtmenge an Polyester bzw. Gemisch pro 100 Molekulargewichtseinheiten mindestens 0,4 olefinisch ungesättigte Doppelbindungen enthält.

Geeignete lineare Diole sind beispielsweise gesättigte hydroxylgruppenhaltige Polyester, Polyether, Polyesteramide, Polyacetate und dergleichen.

Als Diisocyanate kommen insbesondere aliphatische und cycloaliphatische Diisocyanate in Betracht. Es sind auch höherfunktionelle Polyisocyanate geeignet, wenn man dafür sorgt, daß keine vorzeitige Vernetzung eintritt. Geeignete Diisocyanate sind beispielsweise Hexamethylendiisocyanat, Trimethylhexamethylendiisocyanat, 2,6-Diisocyanatomethylcapronat, 4,4'-Dicyclohexylmethandiisocyanat und Isophorondiisocyanat.

Die Umsetzung des Polyesters mit dem Diisocyanat wird so durchgeführt, daß das entstehende erste Zwischenprodukt endständige Isocyanatgruppen aufweist, d. h. bezogen auf 1 Mol Polyester werden etwa 2 Mol Diisocyanat eingesetzt.

Erfindungsgemäß werden Verbindungen verwendet, die mindestens 2 mit Isocyanatgruppen reagierende Gruppen und mindestens eine zur Anionenbildung befähigte Gruppe enthalten. Geeignete mit Isocyanatgruppen reagierende Gruppen sind insbesondere Hydroxylgruppen und primäre und sekundäre Aminogruppen. Als zur Anionenbildung befähigte Gruppen kommen Carboxyl- und Sulfonsäuregruppen in Betracht. Diese Gruppen werden vor der Umsetzung mit einem tertiären Amin neutralisiert, um eine Reaktion mit den Isocyanatgruppen zu vermeiden. Die Umsetzung wird so durchgeführt, daß ein zweites Zwischenprodukt mit endständigen Isocyanatgruppen entsteht. Die Molmengen der Reaktionspartner werden also so gewählt, daß das erste Zwischenprodukt im Überschuß vorliegt.

Als Verbindung, die mindestens 2 mit Isocyanatgruppen reagierende Gruppen und mindestens 1 zur Anionenbildung befähigte Gruppe enthält, sind beispielsweise Dihydroxypropionsäure, Dimethylolpropionsäure, Dihydroxybernsteinsäure oder Dihydroxybenzoesäure geeignet. Geeignet sind auch die durch Oxydation von Monosacchariden zugänglichen Polyhydroxysäure, z. B. Glukonsäure, Zuckersäure, Schleimsäure, Glukuronsäure und dergleichen.

Aminogruppenhaltige Verbindungen sind beispielsweise a,d-Diaminovaleriansäure, 3,4-Diaminobenzoesäure, 2,4-Diamino-toluol-sulfonsäure-(5), 4,4'-Diamino-diphenyl-ethersulfonsäure und dergleichen.

Das zweite Zwischenprodukt weist anionische Gruppen auf, die mit einem tertiären Amin neutralisiert werden. Geeignete tertiäre Amine sind beispielsweise Trimethylamin, Triethylamin, Dimethylanilin, Diethylanilin, Triphenylamin und dergleichen.

Nach Überführung des zweiten Zwischenprodukts in eine wäßrige Phase werden die endständigen Isocyanatgruppen mit einem primären oder sekundären Diamin als Kettenverlängerungsmittel zu N-Alkylharnstoffgruppen umgesetzt. Hierfür geeignete Diamine sind beispielsweise Ethylendiamin, Diaminopropon, Hexamethylendiamin, Hydrazin, Aminoethylethanolamin und dergleichen. Die Umsetzung mit dem Diamin führt zu einer weiteren Verknüpfung und Erhöhung des Molekulargewichts.

Die zweite wesentliche Bindemittelkomponente der erfindungsgemäßen Dispersionen ist verseifter Schellack. Es ist an sich bekannt, wäßrige Lösungen oder Dispersionen von Schellack durch Erhitzen in Wasser in Gegenwart von Basen wie Borax, Morpholin oder Ammoniak herzustellen.

Im Rahmen der vorliegenden Erfindung hat es sich herausgestellt, daß die Verwendung von Ammoniak in bezug auf die Lagerstabilität der resultierenden Dispersionen die günstigsten Ergebnisse liefert.

Es war überraschend, daß die Kombination der obengeschilderten Polyurethankunstharze mit verseiftem Schellack Dispersionen mit überragenden Eigenschaften ergeben würde, die durch den Zusatz von 1 bis 25 Gew.-%, bezogen auf die Summe aller Bestandteile, Netzmitteln und/oder Emulgatoren noch weiter verbessert werden können. Die Dispersionen ergeben Überzüge mit guter Haftung auch auf schwierigen Untergründen, sie trocknen schnell, und die resultierenden Überzüge weisen eine gute Härte auf.

Die Erfindung betrifft auch ein Verfahren zur Herstellung von wäßrigen Dispersionen auf der Basis eines Polyurethankunstharzes, bei dem ein hydroxylgruppenhaltiger Polyester mit einem Diisocyanat zu einem ersten Zwischenprodukt umgesetzt wird und dieses mit einer Verbindung, die mindestens zwei mit Isocyanatgruppen reagierende und mindestens eine zur Anionenbildung befähigte Gruppe enthält, und einem Kettenverlängerungsmittel weiter umgesetzt wird.

Das erfindungsgemäße Verfahren ist dadurch gekennzeichnet, daß

— ein ungesättigter Polyester oder ein Gemisch eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt umgesetzt wird, dieses mit der Verbindung, die mindestens zwei mit Isocyianatgruppen reagierende Gruppen und mindestens eine zur Anionenbildung befähigte Gruppe enthält, zu einem endständige Isocyanatgruppen aufweisenden zweiten Zwischenprodukt umgesetzt wird, wobei die zur Anionenbildung befähigte Gruppen vor der Umsetzung mit einem tertiären Amin neutralisiert worden sind, das zweite Zwischenprodukt in eine überwiegend wäßrige Phase überführt wird und die Isocyanatgruppen des zweiten Zwischenprodukts mit einem Di- und/oder Polyamin mit primären und/oder sekundären Aminogruppen umgesetzt wird,

— Schellack durch Einwirkung von Basen verseift wird und

— die Dispersion des Polyurethankunstharzes mit dem verseiften Schellack, gegebenenfalls unter Zusatz von 1 bis 25 Gew.-%, bezogen auf die Summe aller Bestandteile, Netzmitteln und/oder Emulgatoren in einem solchen Verhältnis gemischt wird, daß sich ein Festkörpergehalt an Polyurethankunstharz von 40 bis 70 Gew.-% und an verseiftem Schellack von 60 bis 30 Gew.-% ergibt, wobei die Summe dieser Bestandteile1000%
beträgt.

Vorteilhaft wird als ungesättigter Polyester ein Polyester aus Maleinsäureanhydrid und einem Diol verwendet.

Vorteilhaft wird ein aliphatisches oder cycloaliphatisches Diisocyanat verwendet.

Als Verbindung, die mindestens zwei mit Isocyanatgruppen reagierende Gruppen und mindestens eine zur Anionenbildung befähigte Gruppe enthält, werden vorteilhaft Dihydroxycarbonsäuren, Dihydroxysulfonsäuren, Diaminocarbonsäuren oder Diaminosulfonsäuren verwendet.

Die Erfindung betrifft weiterhin ein Verfahren zur Herstellung von Überzügen durch Aufbringen einer wäßrigen Dispersion auf der Basis eines Polyurethankunstharzes, das durch Umsetzung eines hydroxylgruppenhaltigen Polyesters mit einem Diisocyanat und weitere Umsetzung mit einer Vebindung, die mindestens zwei mit Isocyanatgruppen reagierende und mindestens eine zur Anionenbildung befähigte Gruppe enthält, und einem Kettenverlängerungsmittel erhalten worden ist, auf ein Substrat und anschließendes Aushärten der aufgebrachten Dispersion, dadurch gekennzeichnet, daß

— das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenproduktes mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukts, wobei die zur Anionenbildung befähigten Gruppen vor der Umsetzung mit einem tertiären Amin neutralisiert worden sind, Überführung des zweiten Zwischenprodukts in eine überwiegend wäßrige Phase und Umsetzung der Isocyanatgruppen des zweiten Zwischenprodukts mit einem Di- und/oder Polyamin mit primären und/oder sekundären Aminogruppen erhalten worden ist und

— die Dispersion als weiteres Bindemittel durch Einwirkung von Basen verseiften Schellack enthält, wobei, jeweils auf den Festkörpergehalt bezogen, der Anteil an Polyurethankunstharz 40 bis 70 Gew.-%, der Anteil an verseiftem Schellack 60 bis 30 Gew.-% betragen und die Summe der beiden Bestandteile 100% ergibt.

Die erfindungsgemäßen Dispersionen, die lagerstabil sind, können Pigmente und übliche Additive wie z. B. Mattierungsmittel, Verlaufhilfsmittel, Verdickungsmittel usw. enthalten. Sie können durch Spritzen, Fluten, Tauchen, Walzen, Rakeln, Gießen, Bürsten, Streichen oder dergleichen auf beliebige Substrate wie Holz, Papier, Metall, mineralische Untergründe, Kunststoffe wie z. B. Hartpolyvinylchlorid, Glas und dergleichen aufgebracht werden. Bei Raumtemperaturen härtet der aufgebrachte Film innerhalb von etwa 24 Stunden zu einem lösungsmittelbeständigen Überzug aus. Durch erhöhte Temperaturen ergeben sich verkürzte Trockenzeiten. So härtet ein mit einer Naßfilmdicke von 30 μm aufgetragener Film bei 70 bis 80°C in 25 sec und bei 180°C in 3 sec aus. Die Lösungsmittelbeständigkeit der erhaltenen Überzüge ist sehr gut. So ist ein mit 30 μm Naßfilmdicke beschichtetes Papier nach 8 Tagen Lagerung beständig gegen Wasser, Methanol, Benzin, Essig, Ethanol, Olivenöl, Cola-Getränke, Tee, Kaffee, Südwein, Bier, Johannisbeersaft, Kondensmilch, Zitronensäure und Kochsalzlösung. Bei Aufkleben und Abreißen eines Klebefilms tritt keine Enthaftung zum Substrat auf.

Eine interessante Anwendung der erfindungsgemäßen Dispersionen liegt in der Beschichtung von Copolymerisatfolien, wie sie zum Beispiel als Abdeckfolien in Gärtnereien und in der Landwirtschaft eingesetzt werden. Durch die kurze Aushärtungszeit bei erhöhten Temperaturen ist eine Beschichtung der Folien von Rolle zu Rolle möglich. Die beschichteten Polyethylenfolien zeigen eine erhöhte Transparenz. Weiterhin wurde gefunden, daß die statische Aufladung der beschichteten Folien gegenüber unbeschichteten Folien herabgesetzt ist. Hierdurch wird die Ablagerung von Staub und ähnlichen Verunreinigungen verzögert, und die Folien behalten über einen längeren Zeitraum ihre hohe Transparenz und Lichtdurchlässigkeit.

Im folgenden wird die Erfindung anhand von Beispielen näher erläutert.

### Beispiel 1

a) Herstellung einer Polyurethandispersion

787 g eines Polyesters aus Neopentylglykol und Maleinsäureanhydrid mit einer Hydroxylzahl von 173 und einer Säurezahl von 2 werden zusammen mit 939 g eines Polyesters aus Adipinsäure und Neopentylglykol mit einer Hydroxylzahl von 98 und einer Säurezahl von 3 auf 100°C erhitzt und in Vakuum entwässert. Bei 80°C werden 1048 g 4,4'-Dicyclohexylmethandiisocyanat zugegeben. Es wird 1 Stunde bei 90°C gerührt. Der NCO-Gehalt beträgt hiernach 5,93%. Nach Abkühlen auf 60°C wird eine Lösung von 134 g Dimethylolpropionsäure und 102 g Triethylamin in 800 g N-Methylpyrrolidon hinzugegeben und 1 Stunde bei 90°C gerührt. Die erhaltene Masse wird unter intensivem Rühren in 4000 g kaltes Wasser gegeben. Man erhält eine feinteilige Dispersion. Bei 40°C werden unter intensivem Rühren innerhalb von 20 Min. 160 g einer 30%igen wäßrigen Lösung von Ethylendiamin hinzugegeben. Man erhält eine Dispersion mit einem Festkörpergehalt von 37 Gew.-%.

### b) Herstellung des verseiften Schellacks

In 2500 g kaltes Wasser werden 115 cm³ Ammoniak eingeleitet, und anschließend werden 1000 g weißgebleichter pulverförmiger Schellack eingerührt. Unter Rühren wird auf 50 bis 60° C erwärmt. Innerhalb von 25 bis 30 Minuten löst sich der Schellack. Die erhaltene Lösung wird filtriert.

### c) Herstellung und Anwendung einer Überzugsmasse

Es werden 50 Gew.-Teile der Dispersion gemäß a), 35 Gew.-Teile des verseiften Schellacks gemäß b), 11 Gew.-Teile eines handelsüblichen anionaktiven Netzmittels und als Emulgator 4 Gew.-Teile eines handelsüblichen Fettalkoholethoxylats durch Rühren vermischt.

Mittels einer Drahtrakel wird die erhaltene Dispersion mit einer Naßfilmdicke von 30 µm auf eine Polyethylenfolie aufgerakelt. Der aufgetragene Film wird innerhalb von 25 Sekunden bei 75° C getrocknet. Der resultierende Überzug zeigt eine gute Haftung, er erhöht die Transparenz der Polyethylenfolie und er zeigt eine gute Lösungsmittelbeständigkeit.

### Beispiel 2

896 g eines Polyesters aus Neopentylglykol, Maleinsäureanhydrid und Adipinsäure mit einem Molverhältnis Maleinsäureanhydrid zu Adipinsäure = 1 : 1, einer Hydroxylzahl von 125 und einer Säurezahl von 3 werden bei 100° in Vakuum entwässert. Bei 80° C werden 524 g Dicyclohexylmethandiisocyanat zugegeben. Es wird 1 Stunde bei 90° C gerührt. Der NCO-Gehalt beträgt hiernach 5,48%. Es wird eine Lösung von 67 g Dimethylolpropionsäure und 51 g Triethylamin in 500 g N-Methylpyrrolidon zugegeben. Es wird 1 Stunde bei 90° C gerührt. Die Masse wird unter intensivem Rühren in 2200 g kaltes Wasser gegeben. Es ergibt sich eine feinteilige Dispersion. Innerhalb von 20 Minuten werden bei 40° C 80 g einer 30%igen wäßrigen Lösung von Ethylendiamin zugegeben. Man erhält eine Dispersion mit einem Festkörpergehalt von 35 Gew.-%.

Es werden 45 Gew.-Teile dieser Polyurethandispersion, 40 Gew.-Teile des verseiften Schellacks gemäß Beispiel 1b, 11 Gew.-Teile Netzmittel und 4 Gew.-Teile Emulgator durch Rühren miteinander gemischt. Die erhaltene Überzugsmasse wird auf eine bitumenhaltige Pappe aufgebracht und bei 80° C gehärtet. Der erhaltene Überzug stellt eine hervorragende Isolierung der Pappe dar. Er verhindert ein Herausdiffundieren von Bitumen bei erhöhten Temperaturen, wie es sonst bei derartigen Pappen beobachtet wird.

### Patentansprüche

1. Wäßrige Dispersionen auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist, dadurch gekennzeichnet, daß

— das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenproduktes mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wäßrige Phase und Umsetzung der Isocyanatgruppen des zweiten Zwischenprodukts mit einem Di- und/oder Polyamin mit primären und/oder sekundären Aminogruppen erhalten worden ist, und

— die Dispersionen als weiteres Bindemittel durch Einwirkung von Basen verseiften Schellack enthalten, wobei, jeweils auf den Festkörpergehalt bezogen, der Anteil an Polyurethankunstharz 40 bis 70 Gew.-%, der Anteil an verseiftem Schellack 60 bis 30 Gew.-% betragen und die Summe der beiden Bestandteile 100% ergibt.

2. Dispersionen nach Anspruch 1, gekennzeichnet durch einen Gehalt an Netzmitteln und/oder Emulgatoren in einer Menge von 1 bis 25 Gew.-%, bezogen auf die gesamte Dispersion.

3. Dispersionen nach Anspruch 1 oder 2, dadurch gekennzeichnet, daß als ungesättigter Polyester ein Polyester aus Maleinsäureanhydrid und einem Diol verwendet worden ist.

4. Dispersionen nach Anspruch 1 bis 3, dadurch gekennzeichnet, daß ein aliphatisches und/oder cycloaliphatisches Diisocyanat verwendet worden ist.

5. Dispersionen nach Anspruch 1 bis 4, dadurch gekennzeichnet, daß als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet worden ist.

6. Dispersionen nach Anspruch 1 bis 4, dadurch gekennzeichnet, daß als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet worden ist.

7. Dispersionen nach Anspruch 1—6, dadurch gekennzeichnet, daß der Schellack mit einer wäßrigen Amoniaklösung verseift worden ist.

8. Verfahren zur Herstellung von wäßrigen Dispersionen auf der Basis eines Polyurethankunstharzes, bei dem ein hydroxylgruppenhaltiger Polyester mit einem Diisocyanat zu einem ersten Zwischenprodukt umgesetzt wird und dieses mit einer Verbindung, die mindestens zwei mit Isocyanatgruppen reagierende Gruppen und mindestens eine zur Anionenbildung befähigte Gruppe enthält, und einem Kettenverlängerungsmittel weiter umgesetzt wird, dadurch gekennzeichnet, daß

— ein ungesättigter Polyester oder ein Gemisch eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt umgesetzt wird, dieses mit der Verbindung, die mindestens zwei mit Isocyanatgruppen reagierende Gruppen und mindestens eine zur Anionenbildung befähigte Gruppe enthält, zu einem endständige Isocyanatgruppen aufweisenden zweiten Zwischenprodukts umgesetzt wird, wobei die zur Anionenbildung befähigte Gruppen vor der Umsetzung mit einem tertiären Amin neutralisiert worden sind, das zweite Zwischenprodukt in eine überwiegend wäßrige Phase überführt wird und die Isocyanatgruppen des zweiten Zwischenprodukts mit einem Di- und/oder Polyamin mit primären und/oder sekundären Aminogruppen umgesetzt wird,

— Schellack durch Einwirkung von Basen verseift wird und

— die Dispersion des Polyurethankunstharzes mit dem verseiften Schellack, gegebenenfalls unter Zusatz von 1 bis 25 Gew.-%, bezogen auf die Summe aller Bestandteile, Netzmitteln und/oder Emulgatoren in einem solchen Verhältnis gemischt wird, daß sich ein Festkörpergehalt an Polyurethankunstharz von 40 bis 70 Gew.-% und an verseiftem Schellack von 60 bis 30 Gew.-% ergibt, wobei die Summe dieser Bestandteile 100% beträgt.

9. Verfahren nach Anspruch 8, dadurch gekennzeichnet, daß als ungesättigter Polyester ein Polyester aus Maleinsäureanhydrid und einem Diol verwendet wird.

10. Verfahren nach Anspruch 8 oder 9, dadurch gekennzeichnet, daß ein aliphatisches oder cycloaliphatisches Diisocyanat verwendet wird.

11. Verfahren nach Anspruch 8 bis 10, dadurch gekennzeichnet, daß als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet wird.

12. Verfahren nach Anspruch 8 bis 10, dadurch gekennzeichnet, daß als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet wird.

13. Verfahren nach Anspruch 8 bis 12, dadurch gekennzeichnet, daß der Schellack mit einer wäßrigen Amoniaklösung verseift wird.

14. Verfahren zur Herstellung von Überzügen durch Aufbringen einer wäßrigen Dispersion auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist, auf ein Substrat und anschließendes Aushärten der aufgebrachten Dispersion, dadurch gekennzeichnet, daß

— das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenproduktes mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukts, wobei die zur Anionenbildung befähigten Gruppen vor der Umsetzung mit einem tertiären Amin neutralisiert worden sind, Überführung des zweiten Zwischenprodukts in eine überwiegend wäßrige Phase und Umsetzung der Isocyanatgruppen des zweiten Zwischenprodukts mit einem Di- und/oder Polyamin mit primären und/oder sekundären Aminogruppen erhalten worden ist, und

— die Dispersion als weiteres Bindemittel durch Einwirkung von Basen verseiften Schellack enthält, wobei, jeweils auf den Festkörpergehalt bezogen, der Anteil an Polyurethankunstharz 40 bis 70 Gew.-%, der Anteil an verseiftem Schellack 60 bis 30 Gew.-% betragen und die Summe der beiden Bestandteile 100% ergibt.

15. Verfahren nach Anspruch 14, dadurch gekennzeichnet, daß die Dispersion 1 bis 25 Gew.-%, bezogen auf die Summe aller Bestandteile, Netzmittel und/oder Emulgatoren enthält.

16. Verfahren nach Anspruch 14 oder 15, dadurch gekennzeichnet, daß als ungesättigter Polyester ein Polyester aus Maleinsäureanhydrid und einem Diol verwendet worden ist.

17. Verfahren nach Anspruch 14 bis 16, dadurch gekennzeichnet, daß ein aliphatisches und/oder cycloaliphatisches Diisocyanat verwendet worden ist.

18. Verfahren nach Anspruch 14 bis 17, dadurch gekennzeichnet, daß als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet worden ist.

19. Verfahren nach Anspruch 14 bis 17, dadurch gekennzeichnet, daß als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet worden ist.

20. Verfahren nach Anspruch 14 bis 19, dadurch gekennzeichnet, daß der Schellack mit einer wäßrigen Amoniaklösung verseift worden ist.

**Claims**

1. An aqueous dispersion based on a polyurethane synthetic resin which has been obtained by reacting a hydroxyl-containing polyester with a diisocyanate and reacting the product with a compound which contains at least two groups which react with isocyanate groups and at least one group capable of anion formation, and with a chain-lengthening agent, wherein
— the polyurethane synthetic resin has been obtained by reacting an unsaturated polyester or a mixture of an unsaturated polyester and a linear diol having a molecular weight of 500 to 2,000, the polyester, or the mixture, containing at least 0.4 olefinically unsaturated double bonds per 1,000 molecular weight units, with the diisocyanate to give a first intermediate product having terminal isocyanate groups, reacting this intermediate product with the compound which contains at least two groups which react with isocyanate groups and at least one group capable of anion formation to give a second intermediate product having terminal isocyanate groups, the groups capable of anion formation having been neutralized by means of a tertiary amine before the reaction, transferring the second intermediate product into a predominantly aqueous phase, and reacting the isocyanate groups of the second intermediate product with a diamine and/or polyamine having primary and/or secondary amino groups, and
— there is present, as a further binder, base-hydrolyzed shellac, where, in each case based on the solids content, the polyurethane synthetic resin content is 40 to 70% by weight, the hydrolyzed shellac content is 60 to 30% by weight, and the two components add up to 100%.

2. A dispersion as claimed in claim 1, which contains wetting agents and/or emulsifiers in an amount of 1 to 25% by weight, based on the entire dispersion.

3. A dispersion as claimed in claim 1 or 2, wherein the unsaturated polyester used was a polyester of maleic anhydride and a diol.

4. A dispersion as claimed in claims 1 to 3, wherein the diisocyanate used was aliphatic and/or cycloaliphatic.

5. A dispersion as claimed in claims 1 to 4, wherein the compound used as containing at least two groups which react with isocyanate groups and at least one group capable of anion formation was a dihydroxycarboxylic acid or a dihydroxysulfonic acid.

6. A dispersion as claimed in claims 1 to 4, wherein the compound used as containing at least two groups which react with isocyanate groups and at least one group capable of anion formation was a diaminocarboxylic acid or a diaminosulfonic acid.

7. A dispersion as claimed in claims 1—6, wherein the shellac has been hydrolyzed with an aqueous ammonia solution.

8. A process for preparing an aqueous dispersion based on a polyurethane synthetic resin by reacting a hydroxyl-containing polyester with a diisocyanate to give a first intermediate product and reacting this intermediate product with a compound which contains at least two groups which react with isocyanate groups and at least one group capable of anion formation and with a chain-lengthening agent, which comprises
— reacting an unsaturated polyester or a mixture of an unsaturated polyester and a linear diol having a molecular weight of 500 to 2,000, the polyester, or the mixture, containing at least 0.4 olefinically unsaturated double bonds per 1,000 molecular weight units, with the diisocyanate to give a first intermediate product having terminal isocyanate groups, reacting this intermediate product with the compound which contains at least two groups which react with isocyanate groups and at least one group capable of anion formation to give a second intermediate product having terminal isocyanate groups, the groups capable of anion formation having been neutralized with a tertiary amine before the reaction, transferring the second intermediate product into a predominantly aqueous phase, and reacting the isocyanate groups of the second intermediate product with a diamine and/or polyamine having primary and/or secondary amino groups,

— base-hydrolyzing shellac, and
— mixing the dispersion of the polyurethane synthetic resin with the hydrolyzed shellac, in the presence or absence of 1 to 25% by weight, based on the total amount of all components, of wetting agents and/or emulsifiers, in such a ratio as to produce a solids content on polyurethane synthetic resin of 40 to 70% by weight and on hydrolyzed shellac of 60 to 30% by weight, the total amount of these components being 100%.

9. A process as claimed in claim 8, wherein the unsaturated polyester used is a polyester of maleic anhydride and a diol.

10. A process as claimed in claim 8 or 9, wherein the diisocyanate used is aliphatic or cycloaliphatic.

11. A process as claimed in claims 8 to 10, wherein the compound used as containing at least two groups which react with isocyanate groups and at least one group capable of anion formation is a dihydroxycarboxylic acid or a dihydroxysulfonic acid.

12. A process as claimed in claims 8 to 10, wherein the compound used as containing at least two groups which react with isocyanate groups and at least one group capable of anion formation is a diaminocarboxylic acid or a diaminosulfonic acid.

13. A process as claimed in claims 8 to 12, wherein the shellac is hydrolyzed with an aqueous ammonia solution.

14. A process for preparing coatings by applying to a substrate an aqueous dispersion based on a polyurethane synthetic resin which has been obtained by reacting a hydroxyl-containing polyester with a diisocyanate and reacting the product with a compound which contains at least two groups which react with isocyanate groups and at least one group capable of anion formation and with a chain-lengthening agent, and then hardening the applied dispersion, wherein
— the polyurethane synthetic resin has been obtained by reacting an unsaturated polyester or a mixture of an unsaturated polyester and a linear diol having a molecular weight of 500 to 2,000, the polyester, or the mixture, containing at least 0.4 olefinically unsaturated double bonds per 1,000 molecular weight units, with the diisocyanate to give a first intermediate product having terminal isocyanate groups, reacting this intermediate product with the compound which contains at least two groups which react with isocyanate groups and at least one group capable of anion formation to give a second intermediate product having terminal isocyanate groups, the groups capable of anion formation having been neutralized by means of a tertiary amine before the reaction, transferring the second intermediate product into a predominantly aqueous phase, and reacting the isocyanate groups of the second intermediate product with a diamine and/or polyamine having primary and/or secondary amino groups, and
— there is present, as a further binder, base-hydrolyzed shellac, where, in each case based on the solids content, the polyurethane synthetic resin content is 40 to 70% by weight, the hydrolyzed shellac content is 60 to 30% by weight, and the two components add up to 100%.

15. A process as claimed in claim 14, wherein the dispersion contains 1 to 25% by weight, based on the total amount of all components, of wetting agents and/or emulsifiers.

16. A process as claimed in claim 14 or 15, wherein the unsaturated polyester used was a polyester of maleic anhydride and a diol.

17. A process as claimed in claims 1 to 16, wherein the diisocyanate used was aliphatic and/or cycloaliphatic.

18. A process as claimed in claims 14 to 17, wherein the compound used as containing at least two groups which react with isocyanate groups and at least one group capable of anion formation was a dihydroxycarboxylic acid or a dihydroxysulfonic acid.

19. A process as claimed in claims 14 to 17, wherein the compound used as containing at least two groups which react with isocyanate groups and at least one group capable of anion formation was a diaminocarboxylic acid or a diaminosulfonic acid.

20. A process as claimed in claims 14 to 19, wherein the shellac has been hydrolyzed with an aqueous ammonia solution.

## Revendications

1. Dispersions aqueuses à base d'une résine synthétique de polyuréthanne que l'on a obtenue par réaction d'un polyester hydroxylé sur un diisocyanate et par réaction ultérieure sur un composé qui contient au moins deux groupes réagissant sur les groupes isocyanates et au moins un groupe capable de former un anion, et sur un agent d'allongement de chaîne, caractérisées par le fait que:
— la résine synthétique de polyuréthanne a été obtenue par réaction d'un polyester insaturé ou d'un mélange d'un polyester insaturé et d'un diol linéaire d'un poids moléculaire de 500 à 2000, le polyester ou le mélange contenant, par 1000 unités de poids moléculaire, au moins 0,4 double liaison à insaturation oléfinique, sur le diisocyanate pour l'obtention d'un premier produit intermédiaire présentant des groupes isocyanates terminaux, réaction de ce produit intermédiaire sur le composé qui contient au moins deux groupes réagissant sur les groupes isocyanates et au moins un groupe capable de former un anion, pour l'obtention d'un deuxième produit intermédiaire présentant des groupes isocyanates terminaux, les groupes capables de former des anions ayant été neutralisés, avant la réaction, par une amine tertiaire, conversion du deuxième produit intermédiaire en une phase principalement aqueuse et réaction des groupes isocyanates du deuxième produit intermédiaire sur une di- et/ou polyamine à groupes amine primaires et/ou secondaires, et que

— les dispersions contiennent comme liant supplémentaire de la gomme-laque saponifiée par l'action de bases, et, à chaque fois relativement à la teneur en solides, la proportion de résine synthétique de polyuréthanne est de 40 à 70% en poids, la proportion de gomme-laque saponifiée de 60 à 30% en poids et la somme des deux constituants donne 100%.

2. Dispersions selon la revendication 1, caractérisées par une teneur en mouillants et/ou émulsifiants de 1 à 25% en poids relativement à l'ensemble de la dispersion.

3. Dispersions selon l'une des revendications 1 et 2, caractérisées par le fait que comme polyester insaturé, on a utilisé un polyester tiré d'anhydride maléique et d'un diol.

4. Dispersion selon l'une des revendications 1 à 3, caractérisées par le fait que l'on a utilisé un diisocyanate aliphatique et/ou cycloaliphatique.

5. Dispersions selon l'une des revendications 1 à 4, caractérisées par le fait que comme composé qui contient au moins deux groupes réagissant sur les groupes isocyanates et au moins un groupe capable de former un anion, on a utilisé un acide dihydroxycarboxylique ou un acide dihydroxysulfonique.

6. Dispersions selon l'une des revendications 1 à 4, caractérisées par le fait que comme composé qui contient au moins deux groupes réagissant sur les groupes isocyanates et au moins un groupe capable de former un anion, on a utilisé un acide diaminocarboxylique ou un acide diaminosulfonique.

7. Dispersions selon l'une des revendications 1 à 6, caractérisées par le fait que la gomme-laque a été saponifiée par une solution aqueuse d'ammoniac.

8. Procédé de préparation de dispersions aqueuses à base d'une résine synthétique de polyuréthanne, dans lequel on fait réagir un polyester hydroxylé sur un diisocyanate pour obtenir un premier produit intermédiaire et on fait réagir ensuite celui-ci sur un composé qui contient au moins deux groupes réagissant sur les groupes isocyanates et au moins un groupe capable de former un anion, et sur un agent d'allongement de chaîne, caractérisé par le fait que:

— l'on fait réagir un polyester inaturé ou un mélange d'un polyester insaturé et d'un diol linéaire d'un poids moléculaire de 500 à 2000, le polyester ou le mélangecontenant, par 1000 unités de poids moléculaire, au moins 0,4 double liaison à insaturation oléfinique, sur le diisocyanate pour l'obtention d'un premier produit intermédiaire présentant des groupes isocyanates terminaux, que l'on fait réagir celui-ci sur le composé qui contient au moins deux groupes réagissant sur les groupes isocyanates et au moins un groupe capable de former un anion, pour obtenir un deuxième produit intermédiaire présentant des groupes isocyanates terminaux, les groupes capables de former des anions ayant été neutralisés, avant la réaction, par une amine tertiaire, que l'on convertit le deuxième produit intermédiaire en une phase principalement aqueuse et que l'on fait réagir les groupes isocyantes du deuxième produit intermédiaire sur une di- et/ou polyamide à groupes amines primaires et/ou seondaires,

— on saponifie de la gomme-laque par l'action de bases et,

— on mélange la dispersion de résine synthétique de polyuréthanne à la gomme-laque saponifiée, éventuellement avec addition de 1 à 25% en poids, relativement à la somme de tous les constituants, de mouillants et/ou d'émulsifiants en un rapport tel que l'on obtienne une teneur en solides de résine synthétique de polyuréthanne de 40 à 70% et en solides de gomme-laque saponifié de 60 à 30% en poids, la somme de ces constituants étant de 100%.

9. Procédé selon la revendication 8, caractérisé par le fait que comme polyester insaturé, on utilise un polyester tiré d'anhydride maléique et d'un diol.

10. Procédé selon l'une ds revendications 8 et 9, caractérisé par le fait que l'on utilise un diisocyanate aliphatique ou cycloaliphatique.

11. Procédé selon l'une des revendications 8 à 10, caractérisé par le fait que comme composé qui contient au moins deux groupes réagissant sur les groupes isocyanate et au moins un groupe capable de former un anion, on utilise un acide dihydroxycarboxylique ou un acide dihydroxycarboxysulfonique.

12. Procédé selon l'une des revendications 8 à 10, caractérisé par le fait que comme composé qui contient au moins deux groupes réagissant sur les groupes isocyanate et au moins un groupe capable de former un anion, on utilise un acide diaminocarboxylique ou un acide diaminosulfonique.

13. Procédé selon l'une des revendications 8 à 12, caractérisé par le fait que l'on saponifie la gomme-laque avec une solution aqueuse d'ammoniac.

14. Procédé de réalisation de revêtements par application sur un subjectile d'une dispersion aqueuse à base d'une résine synthétique de polyuréthanne que l'on a obtenue par réaction d'un polyester hydroxylé sur un diisocyanate et nouvelle réaction sur un composé qui contient au moins deux groupes réagissant sur les groupes isocyanates et au moins un groupe capable de former un anion, et sur un agent d'allongement de chaîne, et ensuite durcissement de la dispersion appliqué, caractérisé par le fait que:

— la résine synthétique de polyuréthanne a été obtenue par réaction d'un polyester insaturé ou d'un mélange d'un polyester insaturé et d'un diol linéaire d'un poids moléculaire de 500 à 2000, le polyester ou le mélange contenant, par 1000 unités de poids moléculaire, au moins 0,4 double liaison à insaturation oléfinique, sur le diisocyanate pour l'obtention d'un premier produit intermédiaire présentant des groupes isocyanates terminaux, réaction de ce produit intermédiaire sur le composé qui contient au moins deux groupes réagissant sur les groupes isocyanates et au moins un groupe capable de former un anion, pour l'obtention d'un deuxième produit intermédiaire présentant des groupes isocyanates terminaux, les groupes capables de former des anions ayant été neutralisés, avant la réaction, par une amine tertiaire, conversion du deuxième produit intermédiaire en une phase principalement aqueuse et réaction des groupes isocyanates du deuxième produit intermédiaire sur une di et/ou polyamine à groupes amine primaires et/ou secondaires, et que

— les dispersions contiennent comme liant supplémentaire de la gomme-laque saponifiée par l'action de bases, et, à chaque fois relativement à la teneur en solides, la proportion de résine synthétique de polyuréthanne est de 40 à 70% en poids, la proportion de gomme-laque saponifiée de 60 à 30% en poids et la somme des deux constituants donne 100%.

15. Procédé selon la revendication 14, caractérisé par le fait que la dispersion contient 1 à 25% en poids, relativement à la somme de tous les constituants, de mouillants et/ou d'émulsifiants.

16. Procédé selon l'une des revendications 14 et 15, caractérisé par le fait que comme polyester insaturé, on a utilisé un polyester tiré d'anhydride maléique et d'un diol.

17. Procédé selon l'une des revendications 14 à 16, caractérisé par le fait que l'on a utilisé un diisocyanate aliphatique et/ou cycloaliphatique.

18. Procédé selon l'une des revendications 14 à 17, caractérisé par le fait que comme composé qui contient au moins deux groupes réagissant sur les groupes isocyanates et au moins un groupe capable de former un anion, on a utilisé un acide dihydroxycarboxylique ou un acide dihydroxysulfonique.

19. Procédé selon l'une des revendications 14 à 17, caractérisé par le fait que comme composé qui contient au moins deux groupes réagissant sur les groupes isocyanates et au moins un groupe capable de former un anion, on a utilisé un acide diaminocarboxylique ou un acide diaminosulfonique.

20. Procédé selon l'une des revendications 14 à 19, caractérisé par le fait que la gomme-laque a été saponifiée par une solution aqueuse d'ammoniac.